# EUROPEAN PATENT APPLICATION

(11) **EP 2 366 451 A1**
(43) Date of publication of application: **21.09.2011**
(21) Application number: 09818981.4
(22) Date of filing: 07.10.2009
(51) Int. Cl.: B01J 20/28, A01C 21/00, B01J 20/12, B01J 20/14, B01J 20/18, B01J 20/20, B09C 1/02, B09C 1/08, B09C 1/10, D21H 21/14, A01N 25/34, A01N 29/04, A01N 29/06, A01N 29/08, A01N 29/12, A01N 31/08, A01P 3/00, A01P 5/00, A01P 7/02, A01P 7/04, C05G 5/00

(54) **HAZARDOUS SUBSTANCE ADSORBING FORMED BODY**

(30) Priority: 08.10.2008 JP 2008261258; 27.04.2009 JP 2009107293
(71) Applicant: Eun, Heesoo, Ibaraki 305-0031 (JP); National Institute For Agro-Enviromental Sciences, Ibaraki 305-8604 (JP); Tokyo Sincol Co., Ltd., Tokyo 114-8512 (JP)
(72) Inventor: FUKUI, Hiroaki, Kawaguchi-shi Saitama 333-0826 (JP)
(74) Representative: Luderschmidt, Schüler & Partner
(86) International application number: PCT/JP2009/005213
(87) International publication number: WO 2010/041441

(57) **Abstract**

[Problems] To provide a formed body, in the form of a water soluble sheet or tablet, that is adapted to be applied to a polluted environment without causing scattering of fine powder, formation of dust and necessitating much labor and that is a hazardous substance adsorbing formed body which has multi-functions including a hazardous substance adsorbing function and which is capable of adsorbing and fixing hazardous substances when applied to the polluted environment.

[Means for solution] A hazardous substance adsorbing formed body which is capable of adsorbing and fixing hazardous substances in a polluted environment such as soil and which contains a powder adsorbent as one of plural ingredients used as a raw material for forming the formed body, the adsorbent being a porous fine powder which contains 200 mesh pass particles and has a particle density, in terms of average particle size, of 100 µm or less, where a proportion of the 200 mesh pass particles is more than 80% by weight. In addition to the adsorbent, an additive for imparting other functions is optionally incorporated.

## Description

### TECHNICAL FIELD

The present invention relates to a hazardous substance adsorbing formed body capable of releasing a fear from contamination of soils of fields, paddy fields, rivers, groundwater, lakes, ponds, etc. More specifically, the present invention is directed to a hazardous substance adsorbing formed body that is formed from a powder adsorbent, configured to adsorb hazardous substances contained in a polluted environment of a soil or water, as a raw ingredient using a binder, and that contains the hazardous substance absorbent powder as one of the raw ingredients used for the preparation of the hazardous substance adsorbing formed body, wherein the particle form of the hazardous substance absorbent powder is specified such that the adsorbent powder is a porous fine powder which contains 200 mesh pass particles and has a article density, in terms of average particle size, of 100 µm or less, where a proportion of the 200 mesh pass particles is more than 80% by weight, and wherein the hazardous substance adsorbing formed body is prepared from a raw material which is a blend of the adsorbent powder, a binder and an additive for imparting other functions than that of the hazardous substance absorbent powder.
The present invention is also directed to a hazardous substance adsorbing formed body which can be embodied in different forms such as in water soluble sheets and tablets and which comprises the hazardous substance absorbent in the form of porous fine powder having the above specific particle form and an additive having other functions. Further, the present invention relates to a hazardous substance adsorbing formed body which shows such effects, when applied to a polluted environment, that it can be applied to the environment without causing flying of the powder and necessitating much labor, that it can be effectively disintegrated and dispersed, that it can adsorb and fix hazardous substances in the polluted environment to the hazardous substance adsorbent, that it can prevent of release of the adsorbed and captured hazardous substance from the adsorbent and can prevent expansion of pollution of the applied environment.

When the hazardous substance adsorbing formed body is provided in the form of a sheet, the adsorbent in the form of a porous fine powder to be incorporated therein is blended with a binder and, optionally, an additive that may impart other functions to form a kneaded mass capable of being deposited or applied to a sheet. The kneaded mass is then deposited or applied to a surface of a previously prepared water soluble sheet, thereby to prepare a multifunctional water soluble sheet having a function of adsorbing hazardous substances. When the hazardous substance adsorbing formed body of the present invention is provided in the form of tablets, the adsorbent in the form of a porous fine powder is first mixed with a binder and, optionally, an additive that may impart other functions, to which a fine powder having a specific gravity of at least 1 is added to form a blend of mixed powders. The blend is then tableted to produce a multifunctional tablet having controlled disintegratability and hazardous substance adsorbing function.

### BACKGROUND ART

Powder spraying, such as agricultural chemical spraying or modifier spraying, is very hard work for elderly farmers. Also, it is difficult to uniformly spray the powder over the soil because of its high dusting property.
On the other hand, as a problem of soil contamination, it is known that hazardous substances, such as dioxins, prohibited agricultural chemicals, volatile organic substances and heavy metals, permeate the soil and are spread by water, such as rainwater or groundwater. Adsorption treatment methods for adsorbing the hazardous substances to solve the soil contamination problem include (a) topsoil replacement, (b) washing the soil with water and recovering the water used for the treatment by adsorption on an adsorbent such as activated carbon, (c) mixing microorganisms that decompose the hazardous substances into the soil, (d) injection of a redox agent into the ground to decompose the hazardous substances, and (e) soil incineration. However, in the case of the method (a), the hazardous substances may be carried by water again from untreated areas and cause recontamination without partitions or a water treatment facility. The method (b) is not suitable for an agricultural soil because it removes silt and rather destabilizes the land and because nutrients necessary for plants are also removed. In addition, the replacement, washing and decomposition detoxification of soil in the methods (a) (b) and (c) require a large amount of cost and a considerable processing time (several months to years).

Methods for reducing the hazardous substances in the soil or fixing the hazardous substances in the soil as countermeasures against soil contamination include (f) spraying a fine powder of an adsorbent, such as activated carbon, over the soil, (g) the use of cartridges filled with simple activated carbon, and (h) the use of an indisintegratable activated carbon sheet which contains activated carbon to adsorb the hazardous substances and is regenerated or disposed of by incineration after recovery. However, the method (f) is not suitable for use in the open air because the fine powder is difficult to distribute uniformly as it is easily blown up and scattered. One possible method to solve this problem is to build a simple greenhouse over the soil to prevent the adsorbent powder from scattering. However, the construction of the simple greenhouse rather increases the cost. Even if such a cover is provided, when the adsorbent is in the form of a fine powder consisting of fine particles with low specific gravity, it causes another problem: an increase in the risk of dust explosion in the simple greenhouse provided to prevent scattering of volatile components and dust. In addition, the method (f) requires a large amount of water because it takes a conventional way of spraying. Moreover, when water containing activated carbon hydrophilized with a surfactant is sprayed, the soil may bubble or contain a relatively excessive amount of water. Then, the soil turns into clay and makes it difficult for the workers to move to the next site of work. This places a burden on the workers. In this aging society, spraying of an agricultural chemical or modifier is very hard work for agriculture workers. The method (h), in which the soil is washed with water and the hazardous substances are recovered by adsorption on activated carbon, uses a large amount of drug to regenerate the activated carbon, and therefore has a high environmental load and requires much time and cost. In addition, because even components in the soil necessary for agricultural crops or living things may be removed, this method is not suitable as a soil reclamation method.

In addition, (I) drug tablets individually packaged in water soluble bags, and (J) foamable drug tablets are also used in special watery places such as paddy fields. For example, a sheet-like fertilizer prepared by impregnating a water soluble sheet with a fertilizer component or applying a fertilizer component to a water soluble sheet for easy and precise delivery of a proper amount of a component required by plants and for convenience in handling (JP-A-2003-104788), and a throwing-in type agrochemical preparation composed of a water floatable solid agrochemical formulation containing a diffusing agent and wrapped in small portions with spreadable water soluble paper to disperse or dissolve active components in water (JP-B-2815535) are known. However, neither of them is suitable for soil treatment in a large area. The conventional sheet-like adsorbing formed body described above cannot treat a highly-contaminated areas into which a large amount of an adsorbent has been introduced. Also in this respect, the sheet-like adsorbing formed body still has a problem in use. Also, there has already been a method by which a finely pulverized product can be attached to a disintegrable or decomposable sheet but there has been no method by which a finely pulverized product can be uniformly applied to a sheet without deteriorating the performance of the finely pulverized product. For the above reasons, a simple and easy method by which recontamination can be prevented and hazardous substances can be fixed without large-scale equipment has been desired.

Therefore, the present inventors have proposed a simple method (I), which uses a water soluble sheet to uniformly remove hazardous substances in a soil, such as dioxins, prohibited agricultural chemicals, volatile organic substances and heavy metals, as means for adsorbing and fixing polluting substances in a polluted environment (Japanese Patent Application No. 2008-261258).

When a water soluble sheet is applied to a polluted water environment, such as rivers, lakes, ponds and groundwater, it is difficult to keep a water soluble sheet at the bottom of the river or the like due to its shape, and there is still a problem to be solved for uniform distribution of the hazardous substance adsorbent after the disintegration of the water soluble sheet unlike in the case where the polluted environment to which it is applied is a soil. It is even more difficult to apply a water soluble sheet to a flowing river, lake or pond. In addition, a method for adsorbing polluting substances spilled into groundwater or rivers or preventing diffusion of the polluting substances accumulated in the bottom sediment of the river or lake is highly desired but the conventional sheet-like adsorbing formed body is not sufficient to be applied to groundwater or river, or the bottom sediment of a river or lake in terms of its ability to adhere to the bottom of the river or lake. As an alternative to the sheet-like adsorbent described above, simple sprinkling of a fine powder of an adsorbent, such as activated carbon, to reduce or fix the hazardous substances in a water environment, such as a river, is considered. This method, however, has problems in use. Because the absorbent powder flies off, some dust control measure is required. Because the fine adsorbent powder consists of fine particles with low specific gravity, it floats on water and cannot stay at the site. Thus, even if a powdery hazardous substance adsorbent is applied to a polluted water environment, such as rivers, lakes, ponds and groundwater, the desired purpose cannot be achieved because the powder floats on water and cannot fulfill its function of adsorbing hazardous substances at the bottom. Another countermeasure against pollution in a water environment, such as rivers, is (J) to spread charcoal on the bottom of the river or lake. However, the method (J) is low in adsorption efficiency and requires a large amount of charcoal to be spread. In addition, the recovered soil needs a reclamation treatment.

Another method is (K) to incorporate a finely pulverized product in disintegrable or decomposable tablets. However, in this method (K), it is difficult to prepare the tablets by direct compression without deteriorating the adsorption performance of the finely pulverized product. In addition, when the prepared tablets are applied to groundwater or a river, or the bottom sediment of a river or lake, the tablets do not disintegrate properly in a cold water at a temperature equal to or lower than human body temperature, and it is even more difficult to control the disintegration time of the tablets. One possible method to improve the disintegrability of the tablet is the use of a saccharide, such as lactose for direct compression tablets. Even so, however, the tablets are not suitable for treatment of the water of a river or lake.

A tablet preparation method using a direct compression technique for preparing a disintegrating tablet with less weight variation, good disintegrability and practical hardness, and dry direct compression fast disintegrating tablets prepared by the dry direct compression method have been disclosed (JP-A-2007-197357). In this case, however, because the tablets are designed to disintegrate at the human body temperature according to Japanese Pharmacopoeia and are not intended to be applied to an open polluted environment, they do not disintegrate at a desired rate in cold water. Therefore, the tablets cannot have, nor are intended to have, controlled disintegrability in cold water at a temperature of 30°C or lower in a water environment such as a river.

Thus, the present inventors put each tablet sample prepared by a direct compression method into a beaker filled with water to imitate a lake or pond to conduct a test. In this test, in order to prevent the hazardous substance adsorbent powder from floating, the hazardous substance adsorbent powder was mixed with powder having a specific gravity of at least 1 and formed into tablets. When the tablets were put into a beaker filled with sample polluted water simulating a polluted environment, the tablets sank to the bottom of the beaker. However, even if the tablets sink, they cannot achieve the desired function of adsorbing hazardous substances unless they disintegrate at the site.
Further test experiments have been made on disintegration of inventive tablets. It has been confirmed that when a powder to be incorporated into molded adsorbing tablets is a hazardous substance adsorbent in the form of fine powder which contains 200 mesh pass particles and has a particle density, in terms of average particle size, of 100 µm or less, where a proportion of the 200 mesh pass particles is more than 80% by weight, the resulting tablets obtained by tabelting the hazardous substance absorbent sink in the bottom of the beaker and are disintegrated. It has been also confirmed that, with regard to the particle size characteristics of the porous fine powder, the particle form of the powder used for the preparation of the adsorbing tablets may be the same as that of the porous fine powder used in the hazardous substance adsorbing, multifunctional water soluble sheet.
It has thus been found that a hazardous substance adsorbing formed body capable of effectively controlling its disintegradability even in a low temperature water can be produced in a specific form that includes at least a hazardous substance adsorbing water soluble sheet or a hazardous substance adsorbing tablet, when an adsorbent powder, used as a hazardous substance adsorbent for preparing the hazardous substance adsorbing formed body, is a porous fine powder which contains 200 mesh pass particles and has a particle density, in terms of average particle size, of 100 µm or less, where a proportion of the 200 mesh pass particles is more than 80% by weight.

### PRIOR ART DOCUMENTS

### Patent Documents

Patent Document 1: JP-A-2003-104788
Patent Document 2: JP-B-2815535
Patent Document 3: JP-A-2007-197357

### SUMMARY OF THE INVENTION

### Problems to be Solved by the Invention:

In order to solve the conventional problems of flying and floating of adsorbent powder that are caused when the absorbent is used to cope with environmental pollution in soil or water, the present invention provides a hazardous substance adsorbing formed body which has been processed so as to prevent flying and floating of adsorbent powder. In the polluted environment to which the hazardous substance adsorbing formed body is applied, hazardous substances accumulated therein are captured and adsorbed by the hazardous substance adsorbent contained in the hazardous substance adsorbing formed body, so that the hazardous substances are confined therein and prevented from penetrating or diffusing into other places.
Here, the hazardous substance adsorbing formed body is provided as a multifunctional, hazardous substance adsorbing formed body which can exhibit not only hazardous substance adsorbing performance but also additional specific functions such as selective adsorption of specific polluting substances. The present invention also provides, as the hazardous substance adsorbing formed body, a multifunctional, hazardous substance adsorbing, water soluble sheet which can reduce labor of aged workers for the prevention of flying or leaking out of the adsorbent fine powder.
In this case, even when the ground to which the hazardous substance adsorbing formed body is applied is inclined, it is possible to evenly distribute the hazardous substance adsorbing agent intimately on the ground by breaking the formed body into suitable sizes. Further, when the hazardous substance adsorbing formed body contains a fertilizing component, it is possible to distribute the component uniformly over the entire ground without causing maldistribution thereof.
The present invention also provides the hazardous substance adsorbing formed body in the form of hazardous substance adsorbing tablets, rather than water soluble sheet, with a view toward attaining the same purposes. In the case of the hazardous substance adsorbing tablets, although ingredients common to the water soluble sheet are used, the tablets have controlled disintegratability. The hazardous substance adsorbing tablets do not fail to sink and do not remain afloat. The tablets do not fail to disintegrate when they sink. Namely, the tablets effectively disintegrate in water and can achieve the desired function of adsorbing hazardous substances.

### Means for Solving the Problems:

In order to solve the above problems, there are provided in accordance with broad aspect of the present invention the following solutions.
Namely, the present invention provides a hazardous substance adsorbing formed body that is formed from a powder adsorbent as a raw ingredient using a binder, wherein the adsorbent is configured to adsorb a hazardous substance contained in a polluted environment of a soil or water, wherein said binder may be an additive that imparts other functions to the raw ingredient, wherein a blend of the adsorbent and the additive is used as a raw material for deposition to a flexible water soluble sheet or for forming a unitary body as such, wherein the raw material is formed, either as such or together with the flexible water soluble sheet, into the hazardous substance adsorbing formed body in the form of a unitary body, wherein the adsorbent powder is a porous fine powder which contains 200 mesh pass particles and has a particle density, in terms of average particle size, of 100 µm or less, where a proportion of the 200 mesh pass particles is more than 80% by weight, and wherein the formed body of the unitary body has controlled disintegratability and dispersability.
The present invention also provides a hazardous substance adsorbing formed body in which the above-described powder adsorbent is specified to be at least one substance selected from minerals such as calcite, zeolite, activated clay, diatomaceous earth and ilmenite; and substances having fast-acting adsorbing performance or water holding property and being polyamino acids, polysaccharides, polyacrylic acid, inorganic salts, chelating agents and activated carbon of 800 m²/g or more, or in which the above described additive is specified to be at least one member that facilitates decomposition of hazardous substances and is an oxidizing agent, a reducing agent, a decomposing bacterium, a slow oxygen-releasing agent and nutrients for growing bacteria.
The present invention further provides a hazardous substance adsorbing formed body as recited in claim 1, wherein the hazardous substance adsorbing formed body is in the form of a sheet comprising the flexible water soluble sheet that is any one or a combination of films, water-soluble papers, water disintegrable papers and non-woven fabrics each made from a fast decomposable material, such as a polysaccharide, a cellulose, polyvinyl alcohol, carboxymethyl cellulose or starch, and deposits of a deposition material which is integrally formed on the sheet and which is a blend containing the powder adsorbent, the additive giving other functions and a water soluble binder.
The present invention further provides a hazardous substance adsorbing formed body in the form of a water-soluble sheet in which the above-described additive is specified to include at least one of a fertilizer, an agricultural chemical, a pH controlling agent and an antibacterial antiseptic agent.
The present invention further provides a hazardous substance adsorbing formed body as recited in claim 1, wherein the hazardous substance adsorbing formed body is in the form of a tablet that has controlled vouyancy and that is formed by integrating under a pressure a blended material which is used as such as a tableting material and which comprises the powder adsorbent, the additive giving other functions, a vehicle serving as the binder and fine powder having a specific gravity of at least 1. The present invention further provides a hazardous substance adsorbing tablet, in which the above-described vehicle is specified to comprise at least one member selected from the group consisting of crystalline cellulose, carboxymethyl cellulose, hydroxypropyl cellulose, starch, lactose, silicon dioxide, a polysaccharide, mannitol and anhydrous calcium hydrogen phosphate.

### Effect of the Invention:

According to the hazardous substance adsorbing formed body of broad aspects of the present invention as recited in claims 1-3, the adsorbent can be uniformly distributed to a polluted environment. The multi-functional hazardous substance adsorbing formed body permits thorough adsorption, capture and fixation of hazardous substances accumulated in the polluted environment by the hazardous substance adsorbent in the form of fine powder contained therein, so that the hazardous substances can be retained in the applied circumstance and can be prevented from penetrating or diffusing into other places. Thus, it is possible to solve the problem of environmental pollution. Further, the hazardous substance adsorbing formed body, when added with an optional additive having other functions, can be multifunctional and can exhibit not only adsorption and fixation properties for hazardous substances contained in an applied environment but also other functions such as fertilizing effect. Moreover, it is possible to reduce labor of aged workers in distributing a powder adsorbent
According to the hazardous substance adsorbing formed body of the present invention in the form of a flexible water soluble sheet as recited in claims 4 and 5, there may be obtained the following effects in addition to the effect of the present invention as recited in claim 1. Namely, with the multi-functional water soluble sheet, it is possible to effectively disperse fine powder adsorbent and additives having other functions into the soil with the aid of small amount of water such as rain water without using a surfactant which would cause groundwater pollution. It is also possible to allow the adsorbent to be suitably bound to the soil by stirring the applied soil or by burying the sheets in layers. Further, it is possible to prevent the adsorbent from flying, to prevent the plants from absorbing and to prevent the ground water from being polluted. The water soluble adsorbing sheet does not adversely affect the adsorbing efficiency because of its water solubility.
According to the hazardous substance adsorbing formed body of the present invention in the form of a tablet as recited in claims 6 and 7, there may be obtained the following effect in addition to the effect of the present invention as recited in claim 1. Namely, because of the inorganic fine powder having a specific gravity of at least 1 added to and compounded in the tablet, the tablet sinks when dropped into water. Further, the disintegration time of the tablet during the precipitation can be controlled.

In the case of the water soluble sheet, when additives such as a disinfectant and a fertilizer are incorporated as functioning agents in addition to the hazardous substance adsorbent, it is possible to disinfect or fertilize the soil simultaneously with reduction of hazardous substances. Thus it is possible to design a multi-functional water soluble sheet that can reduce the working time. Because the sheet material may be formed of a cellulose material which is low in environmental load, the articles may be designed with sufficient consideration for safety. Further, irrespective of conditions of the cultivation land such as overly drained land and sloped ground, it is possible to effectively distribute the sheet without escape of uniformly dispersed functional additive so that the desired function can be kept thourghout the area on which the water soluble sheet is laid. Thus, the sheet may be utilized for disinfection of the soil, application of fertilizers, application of additional fertilizers, soil amelioration, etc.

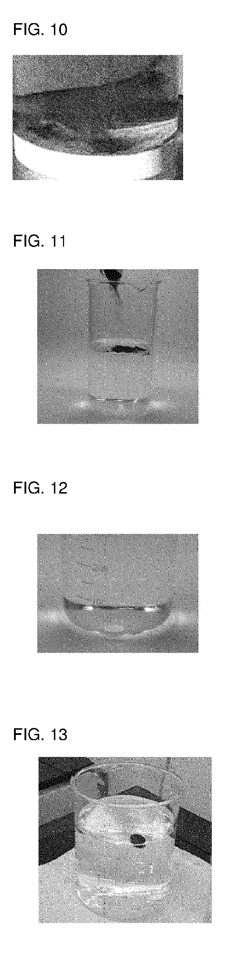

In the case of tablets, application and treatment works may be very easily carried out by throwing, etc., irrespective of whether the applied place is water or soil. In the case of the treatment of a polluted environment such as river and groundwater, escape of fine powder by floating can be prevented. Further, it is possible to control dispersibility and buoyancy of the absorbent. Furthermore, it is possible to prevent flying of the fine powder and dust explosion and to improve the safety of workers and neighborhood. Additionally, the tablets may be produced from raw materials including powder having a specific gravity of at least 1 and porous adsorbent fine powder at a relatively cost by press-bonding and tableting the raw materials at a low pressure using a general tableting device.
Further, a tablet making process employed in the present invention is easier than a granule making process and can be performed in a short production time. Additionally, it is possible to freely select weight and size of the tablets according to object of use. Because the raw materials for the tablets are cellulose-based materials which have low environmental load, minerals which are stable in nature, and carbon, it is possible to design goods in which safety is sufficiently taken into consideration. It is also possible to effectively disperse fine powder adsorbent into the arid zone soil with the aid of small amount of water such as rain water, to allow the adsorbent to be suitably bound to the soil by stirring the applied soil and to prevent the adsorbent from flying. Further, hazardous substances can be fixed to the adsorbent so that the plants are prevented from absorbing the hazardous substances and the ground water is prevented from being polluted.
The tablet according to the present invention shows accelerated disintegratability even when a disintegration agent is not incorporated. The reason for this is considered to be that the hardness of outer surfaces of the porous fine powder is increased during the course of tableting so that the air in interstices thereof is confined and compressed therein. As a result, when the tablet is exposed to a water-rich environment during use, a large amount of water is absorbed in the interstices by the capillary action with the simultaneous discharge of the confined air, so that disintegration of the tablet occurs at a burst (see FIG. 10).
It is inferred that, in the above phenomenon, the air discharged from the interstices of the porous powder serves to function as a foaming agent. For this reason, the tablet of the present invention prepared by a direct compression tableting method is considered to show accelerated disintegratability upon absorption of water. Although the tablet of the present invention is disintegratable without a disintegration agent, a disintegration agent may be incorporated into the tablet, if desired, to further accelerate the disintegration. Whether to incorporate a disintegration agent may be determined at will. It has been found that when a tablet is prepared using a granulation device other than a tableting device, acceleration of disintegration is not achieved.
Summarizing, in the present invention, an intended hazardous substance adsorbing formed body is produced from a plurality of raw ingredients one of which is a hazardous substance adsorbent powder. The hazardous substance absorbent powder is specified from the standpoint of the particle form such that the adsorbent powder is a porous fine powder which contains 200 mesh pass particles and has a particle density, in terms of average particle size, of 100 µm or less, where a proportion of the 200 mesh pass particles is more than 80% by weight. An easily soluble water soluble sheet or an easily disintegratable and diffusible tablet may be prepared by processing a raw material which is a blend of the adsorbent powder, a binder and, if necessary, an additive for imparting other functions than hazardous substance absorbing property. In this case, since both of the sheet and tablet may be produced as a solid formed body, the problem of environmental pollution by flying powder that has been conventionally unavoidably caused when the fine powder adsorbent is distributed to a polluted environment can be solved. At the same time, the sheet and tablet have good compatibility with the environment, such as soil, to be applied, so that the desired hazardous substance adsorbing function thereof can be effectively achieved.

### BRIEF DESCRIPTION OF DRAWINGS

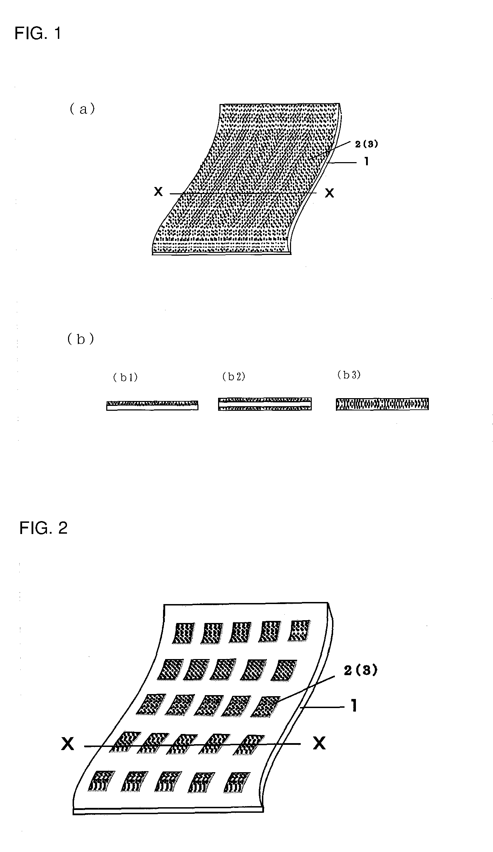

FIG. 1 illustrates a water soluble sheet as an embodiment of the hazardous substance adsorbing formed body, in which (a) is a schematic perspective view of a variant in which an adsorbent is applied to the entirety of a sheet, (b) illustrates examples of cross-sections along the line X-X wherein, as examples of the manner of applying the adsorbent to the sheet, (b1) is a cross-sectional view of an embodiment in which one side of the sheet is applied, (b2) is a cross-sectional view of an embodiment in which both sides of the sheet are applied, and (b3) is a cross-sectional view of an embodiment in which the adsorbent is kneaded into the whole sheet.
FIG. 2 illustrates a water soluble sheet as another embodiment of the hazardous substance adsorbing formed body, in which an adsorbent is applied to one side of the sheet in a divided manner.
FIG. 3 is a bar chart showing the data obtained in experiments where the water soluble sheet of the present example was applied to the soil in pots and where variations in dieldrin concentrations in leaves and stems of cucumbers depending on the presence or absence of an activated carbon sheet and on the content of the activated carbon were compared.
FIG. 4a is a photographs showing a state of the water soluble sheet during watering simulating a rainfall, when a water soluble sheet of Example 1 is applied to an open soil.
FIG. 4b shows a state of the water soluble sheet during the process of being mixed into the soil by a cultivator after watering.
FIG. 5(a) shows photographs that show the state of a water soluble sheet coated with activated carbon and impregnated with potassium bicarbonate and citric acid as a water soluble sheet of Example 1 immediately after it was spread over a soil and wetted with water, for comparison with the state of the sheet after it was mixed into the sail approximately ten minutes later and shows the state of the sheet immediately after it was wetted with water.
FIG. 5b shows the state of the sheet mixed well with the soil by stirring approximately ten minutes after it was wetted with water.
FIG. 6 is a photograph showing the state of a tablet 3 seconds after having been dropped in water, in which a diffusion type, activated carbon tablet with a standard dispersing time (prepared using the blending ratio shown in Inventive Product 2 in Table 1) was used as a tablet of Example 2.
FIG. 7a is a photograph showing the state of a tablet 3 seconds after having been dropped in water, in which a diffusion type, activated carbon tablet with a standard dispersing time (prepared using the blending ratio shown in Inventive Product 3 in Table 1) was used as a tablet of Example 2.
FIG. 7b is a photograph showing the state of a tablet 60 seconds after having been dropped in water.
FIG. 8 is a photograph showing the state of a tablet 3 seconds after having been dropped in water, in which a diffusion type, activated carbon tablet with a quick dispersing time (prepared using the blending ratio shown in Inventive Product 6 in Table 1; ?; not corresponding to Table 1) was used as a tablet of Example 2.
FIG. 9a is a photograph showing the results of the test of dispersibility of Inventive Product 2 (shown in Table 1 as an example of tablet of Example 2) in soil by water drops, (a) being a photograph of the activated carbon tablet before dropping water.
FIG. 9b is a photograph showing the dispersing state of the activated carbon tablet 30 seconds after completion of dropping of water.
FIG. 10 shows the state in which a tablet of Example 2 was dispersed while generating foams in a test for evaluating property of adsorbing chemical substances discharged from the bottom sediment sampled from a river.
FIG. 11 shows the state of conventional ordinary fine powder activated carbon (Comparative Example 2 shown in Table 1) immediately after having been dropped in water at 15°C.
FIG. 12 shows the state of a tablet, formed only of a conventional vehicle of crystalline cellulose (Comparative Example 3 shown in Table 1), 600 seconds after having been dropped in water at 15°C.
FIG. 13 shows the state of a tablet, formed by compoacting fine powder activated crabon using polyvinyl alcohol as a water soluble resin (Comparative Example 4 shown in Table 1), 600 seconds after having been dropped in water at 15°C.

### EMBODIMENTS OF THE INVENTION

The present invention provides a hazardous substance adsorbing formed body that is formed from a powder adsorbent as a raw ingredient using a binder, wherein the adsorbent is configured to adsorb a hazardous substance contained in a polluted environment of a soil or water, wherein said binder an additive that imparts other functions to the raw ingredient, wherein a blend of the adsorbent and the additive is used as a raw material for deposition to a flexible water soluble sheet or for forming a unitary body as such, wherein the raw material is formed, either as such or together with the flexible water soluble sheet, into the hazardous substance adsorbing formed body in the form of a unitary body, wherein the adsorbent powder is a porous fine powder which contains 200 mesh pass particles and has a particle density, in terms of average particle size, of 100 µm or less, where a proportion of the 200 mesh pass particles is more than 80% by weight, and wherein the formed body of the unitary body has controlled disintegratability and dispersability.
Concrete embodiments of the present invention are described below.
The present invention also provides a multi-functional water soluble sheet having a water soluble sheet to which a kneaded mass containing fine powder and a water soluble binder is deposited or into which the kneaded mass is kneaded. The fine powder used has a composition containing a fine powder adsorbent capable of adsorbing hazardous components and one of or a combination of additives which are capable of imparting other functions and which may be added if necessary. The adsorbent powder is a porous fine powder which contains 200 mesh pass particles and has a particle density, in terms of average particle size, of 100 µm or less, where a proportion of the 200 mesh pass particles is more than 80% by weight. In this case the multi-functional water soluble sheet may be composed of two or more water soluble sheets between which the fine powder is deposited.

The present invention provides a multi-functional water soluble sheet which can contain a mixture of porous adsorbents capable of adsorbing different kinds of substances such as hazardous organic compounds and hazardous inorganic compounds. In this case, in order to provide a multi-functional water soluble sheet, the entire or part of the adsorbent may contain a naturally occurring mineral such as calcite, zeolite, activated clay and diatomaceous earth, which is porous or has adsorbing properties; the entire or part of the adsorbent may be activated carbon having a specific surface area of 800 m²/g or more;
The entire or part of the adsorbent may contain a hydroxide salt, a carbonate salt, a hydrogen carbonate salt, a phosphate salt, a sulfide or a sulfate salt (each of which is capable of forming a sparingly soluble heavy metal salt), ilmenite, a chelating agent together with a pH controlling agent; the entire or part of the adsorbent may contain polyglutamic acid having fast-acting heavy metal adsorbing performance or water holding property and being capable of acting as a fertilizer after having been decomposed in the soil; or the adsorbent may be a porous adsorbent containing a combination of substances such as microbial decomposing bacteria, slow oxygen-releasing agents and nutrients for growing bacteria.

The present invention can provides a multi-functional water soluble sheet containing an additive. The entire part or a part of the additive may be a substance that is an oxidizing agent or a reducing agent. The present invention can also provide a multi-functional water soluble sheet for agricultural use containing plant essential amino acids, a nitrogen component, a phosphorus component and a potassium component as the additive, and a multi-functional water soluble sheet containing a foaming dispersing agent obtained by mixing an additive of a carbonate salt (e.g. potassium carbonate) or a hydrogen carbonate salt contained in a fertilizer with a solid acid such as citric acid or ascorbic acid.
There are also provided multifunctional water soluble sheets containing soil fungicides, antiseptics and disinfectants as the additive; multifunctional water soluble sheets containing ethyl alcohol having an alcohol content of 10 to 80% as the additive; multifunctional water soluble sheets containing agricultural chemical components or drugs on the positive list as the additive; multifunctional water soluble sheets containing water soluble adhesive additives that do not inhibit the basic performance of the fine powder such as an adhesive composed of a mixture of alcohols and polysaccharides; and multifunctional water soluble sheets containing, as the water soluble adhesive additives, an adhesive composed of a mixture of ethyl alcohol, polyvinyl alcohol and a polysaccharide thickener.

The present invention further provides a multifunctional water soluble sheet which uses, as the water soluble sheet, any one or a combination of films, water soluble papers, water disintegrable papers and unwoven fabrics each made mainly from a fast decomposable material, such as a polysaccharide, a cellulose, polyvinyl alcohol, carboxymethyl cellulose or starch, may be used as the water soluble sheet. Thus, the present invention can provide multifunctional water soluble sheets which can adsorb hazardous substances in the soil when laid on surfaces of the soil or placed within the soil and when dissolved therein by sprinkling, rain, snow or moisture contained therein, which are high in safety and which can be used in arid zone soil or for agriculture.

The present invention is also embodied as a hazardous substance adsorbing tablet. In this case, the size, proportion of the ingredients, disintegration speed, etc. of the tablet may be freely designed depending on the shape thereof and place of use thereof. Further, since the tablet may be produced by tableting with a low pressure, there is no need to use a specifically designed device. A rotary tableting press machine used in food and pharmaceutical industries may be utilized.
In use of the molded tablets containing a fine powder adsorbent, application and treatment works may be very easily carried out by throwing, etc., irrespective of whether the applied place is water or soil. In the case of the treatment of river and groundwater, escape of fine powder by floating can be prevented. Further, it is possible to control dispersibility and buoyancy of the absorbent and to increase the degree of freedom of adsorption performance of the tablet. In order to prepare tablets having the above performance, it is desirable to use an adsorbing powder material which is obtained by blending or mixing porous fine powder adsorbent with powder having a specific gravity of at least 1. Namely, the adsorbing powder material is obtained by press-bonding or mixing a fine powder absorbent to or with powder having a specific gravity of at least 1, wherein the fine powder adsorbent contains 200 mesh pass particles and has a particle density, in terms of average particle size, of 100 µm or less, where a proportion of the 200 mesh pass particles is more than 80% by weight.
The adsorbent may be composed of one of or a combination of organic adsorbent and inorganic adsorbent so that the adsorbing performance may be freely determined in consideration of the degree of pollution. In this case, the blended powder material may contain one or a plurality of vehicles and lubricants in addition to the porous powder and may be formulated into a mixture that is capable of being formed into single layer or multilayer tablets by a direct compression tableting process. Thus, these ingredients may be combined to provide tablets having various disintegration times or tablets containing adsorbents having different performances.
The kind and concentration of pollutants vary with place to place. However, when the present invention is embodied as hazardous substance adsorbing tablets containing a porous adsorbent mixture containing substances capable of adsorbing different kinds of organic hazardous compounds and inorganic hazardous compounds, it is possible to select adsorbents suited for adsorbing and fixing target pollutants. In particular, it is possible to freely change or design the performance of adsorbing hazardous components in correspondence to the highly polluted conditions.
In the present invention, one or a plurality of porous inorganic minerals and naturally occurring minerals such as calcite, zeolite, active clay, granite pegmatite and ilmenite or one or a plurality of artificial zeolite substances whose pore size has been controlled, may be incorporated for the purpose of controlling the buoyancy of the tablet by utilizing the properties of the powder having a specific gravity of at least 1.

In the present invention, the entire or part of the adsorbent may be activated carbon having a specific surface area of 800 m²/g or more. Further, the entire or part of the adsorbent may be one or a plurality of polyaminoacids, polysaccharides, polyacrylic acid, inorganic salts and chelating agent which has a property of quickly adsorbing heavy metals or a function of water retentivity.
In the present invention, the tablet may contain one or a combination of vehicles of crystalline cellulose, carboxymethyl cellulose, hydroxypropyl cellulose, starch, lactose, silicon dioxide, a polysaccharide, mannitol and anhydrous calcium hydrogen phosphate, in the form fine powder or powder. A combination of crystalline cellulose, silicon dioxide and a polysaccharide is particularly preferred because they are food additives or medicines that have low environmental load and are harmless.
In the present invention as whole or a part of the additive, it is possible to use a substance containing an oxidizing agent, a reducing agent or a combination, or organic substance decomposing bacteria since the bacteria are not damaged during low pressure compression tableting. By this expedient, it is possible to achieve bioremediation and to enhance decomposition of organic substances. Thus, the present invention can provide hazardous substance adsorbing tablets which can adsorb hazardous components in the soil when laid on surfaces of the soil or placed within the soil and when dissolved therein by sprinkling, rain, snow or moisture contained therein, which can be used in arid zone soil or for agriculture and which are high in safety.

It is most preferred that the tablet contain activated carbon having an average particle size of 100 µm or less and a specific surface area of 800 m²/g or more as the adsorbent in an amount of 50% by weight based on the weight of the tablet, and a combination of crystalline cellulose and silicon dioxide as a mixture of the powders having a specific gravity of at least 1, since, as described above, the resulting hazardous substance adsorbing tablet has the optimum form which permits free design of the adsorption performance and disintegration and dispersing performance and which has a simple composition.

### EXAMPLE 1

FIG. 1 illustrates an embodiment of a hazardous substance adsorbing water soluble sheet having a water soluble sheet to which powder adsorbent capable of adsorbing at least hazardous substances is deposited, in which (a) is a schematic perspective view of a sheet of the hazardous substance adsorbing water soluble sheet, and (b) illustrates examples of cross-sections along the line X-X. In fabrication of the hazardous substance adsorbing water soluble sheet 1, a blend containing powder adsorbent capable of adsorbing at least hazardous substances and a binder is kneaded, the resulting kneaded mass being deposited to a surface of the water soluble sheet 1.

The powder adsorbent for adsorbing hazardous substances is a fine powder so as to be well mixed with the soil and is preferably a fine powder which contains 200 mesh pass particles and has a particle density, in terms of average particle size, of 100 µm or less, where a proportion of the 200 mesh pass particles is more than 80% by weight. The fine powder is contained in an amount of 20 g/m². The powder adsorbent for adsorbing hazardous substances is a porous fine powder capable of being mixed with substances capable of adsorbing different kinds of substances such as organic hazardous compounds and inorganic hazardous compounds.

In this case, the entire or part of the adsorbent may contain a naturally occurring mineral such as calcite, zeolite, activated clay and diatomaceous earth, which is porous or has adsorbing properties; the entire or part of the adsorbent may be activated carbon having a specific surface area of 800 m²/g or more; the entire or part of the adsorbent may contain a material which is one of or a combination of a hydroxide salt, a carbonate salt, a hydrogen carbonate salt, a phosphate salt, a sulfide or a sulfate salt (each of which is capable of forming a sparingly soluble heavy metal salt), ilmenite, a chelating agent and which may be used together with a pH controlling agent; the entire or part of the adsorbent may contain polyglutamic acid having fast-acting heavy metal adsorbing performance or water holding property and being capable of acting as a fertilizer after having been decomposed in the soil; or the adsorbent may be a porous adsorbent containing a combination of substances such as microbial decomposing bacteria, slow oxygen-releasing agents and nutrients for growing bacteria.
Thus the hazardous substance adsorbent which is fine powder and has a porous form may be blended with the above-described various components and may be kneaded together with a binder. The kneaded mass is deposited on a surface of a water soluble sheet 1 to obtain a hazardous substance adsorbing water soluble sheet, so that various functions may be imparted thereto to provide a multifunctional hazardous substance adsorbing water soluble sheet. According to Example 1, therefore, it is possible to change the design of the adsorbent in a high degree of freedom in view of the soil components.

In the present invention, the hazardous substance adsorbent-containing multifunctional water soluble sheet of Example 1 may be produced as an agricultural multifunctional water soluble sheet containing, as whole or part of additives, nutrients, such as amino acids essential for plants, nitrogen, phosphorus and potassium, or a foaming dispersant that is obtained by mixing a carbonate or hydrogen carbonate additive such as potassium carbonate for use in fertilizers with a solid acid and added in order to facilitate the disintegration of the sheet and to mix the fine powder contained in the sheet with the soil.
Examples of usable additives include soil fungicides, antiseptics, disinfectants, disinfectants such as an ethyl alcohol with an alcohol content of 10 to 80%, agricultural chemical components or drugs on the positive list, and water soluble adhesive additives that do not inhibit the basic performance of the fine powder such as an adhesive composed of a mixture of alcohols and polysaccharides. As the water soluble adhesive additives, the use of an adhesive composed of a mixture of ethyl alcohol, polyvinyl alcohol and a polysaccharide thickener is preferred. When the hazardous substance adsorbent is applied to the entire surface of the sheet, the hazardous substance adsorbent may be applied to both sides of the sheet as shown in (b2) among the cross-section examples in FIG. 1(b) instead of just one side as shown in (b1). Alternatively, the hazardous substance adsorbent may be incorporated by kneading in the entire water soluble sheet as shown in (b3).

In the present invention, a flexible water soluble sheet that is composed of any one or a combination of films, water soluble papers, water disintegrable papers and unwoven fabrics each made mainly from a fast decomposable material, such as polysaccharides, cellulose, polyvinyl alcohol, carboxymethyl cellulose or starch, may be used as the water soluble sheet.

In the present invention, the adsorbent may be applied to one side of the sheet in a divided manner as shown in FIG. 2 to form a multifunctional water soluble sheet. When the sheet is partially coated, blocking of sheet can be prevented and the sheet can be prevented from being caught on the cultivator during soil mixing. In a multifunctional water soluble sheet on which the adsorbent is applied in a divided manner as shown in FIG. 2, the adsorbent may be also applied to both sides of the sheet instead of just one side or incorporated by kneading in the water soluble sheet as in the examples shown in FIG. 1. The degree of division of the adsorbent can be easily changed depending on the environment in which the multifunctional water soluble sheet is used and the level of functions required.

Alternatively, in the present invention, the multifunctional water soluble sheet may be produced as a multifunctional water soluble sheet with two water soluble sheets for supporting the adsorbent formed by covering the adsorbent applied in a divided manner to one side of a water soluble sheet with another water soluble sheet. In this case, because drugs which are reactive each other, such as a combination of microorganism degrading bacteria, a slow oxygen-releasing agent and nutrients for growing bacteria or a combination of an oxidizing agent and a reducing agent, can be kept from contacting with each other, a variety of adsorbents or additives can be supported in layers or partially coated. The multifunctional water soluble sheet of this type does not disintegrate and allow reaction control until it is contacted with water. The multifunctional water soluble sheet may be produced as a multifunctional water soluble sheet including two or more water soluble sheet for supporting adsorbents and additives.

### Adsorption performance test on hazardous substance adsorbing multifunctional water soluble sheet:

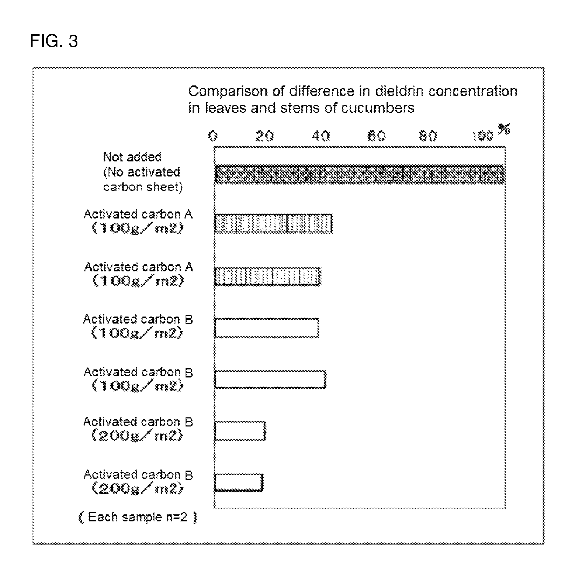

To evaluate the adsorption performance of the water soluble sheet, an experiment was conducted to determine if the presence or absence of activated carbon made any difference in the dieldrin concentration in leaves and stems of cucumbers as a small-scale test (pot test). FIG. 3 is a bar chart showing the experiment data obtained from the small-scale test (pot test) to compare the differences in dieldrin concentration in leaves and stems of cucumbers depending on the presence or absence of an activated carbon sheet and the content of the activated carbon sheet.
The test method was as follows. A fertilizer was added to the soil, and the sheets as described below were prepared and applied to the soil. Then, a cucumber growth experiment was conducted to see if any difference would be made depending on the presence or absence of the sheet or when the activated carbon sheet content was doubled.

### Details of test and samples used:

A water soluble paper, 30 MDP (fast disintegrating carboxymethyl cellulose sheet) manufactured by MISHIMA PAPER Co.,Ltd. (now NIPPON PAPER PAPYLIA CO., LTD.), and commercially available activated carbons A and B, manufactured by different manufacturers, each of which has a specific surface area of 1000 m²/g and contains 200 mesh pass particles and which has an average particle size of 100 µm or less, where a particle density of the 200 mesh pass particles is such that a proportion thereof is more than 80% by weight. were used. 95 Parts of each activated carbon and 5 parts of polyvinyl alcohol were mixed with a 90% aqueous ethyl alcohol solution and the mixture was stirred to prepare process solutions. Each process solution was uniformly sprayed onto a surface of a water soluble paper and dried such that the activated carbon content was 100 g/m² to obtain activated carbon sheets A and B for comparison with a water soluble paper without an activated carbon sheet.

### Test result:

According to FIG. 3, when no activated carbon sheet was provided (no activated carbon was added), the concentration did not change from 100%. When activated carbon (activated carbon sheet A or B) was added, the concentration comparison value significantly decreased to 30 to 40%. In addition, the concentration comparison value was 30 to 40% for sheets with an activated carbon content of 100 g/m² and approximately 18% for sheets with an activated carbon content of 200 g/m². In other words, the performance of activated carbon was comparable to simple activated carbon even in the form of a sheet, and it became apparent that the amount of dieldrin can be reduced when the amount of activated carbon per unit area is increased. In the above cucumber growth experiment, no growth inhibition of cucumber was observed even when activated carbon was added, and there was no difference in the growth rate of the cucumbers from the case where no sheet was added.

In this small-scale test, the process conditions in the analysis of the plant bodies were as follows.
Extraction: 100 mL of acetone was added to 10 g of the sample, and the sample was pulverized. The mixture was filtered with a 0.3 µm glass filter paper and the filtrate was condensed to 3 mL. It may be produced as a multifunctional water soluble sheet including two or more water soluble sheet for supporting adsorbents and additives. The condensate was purified with a Florisil column and an ENVI-Carb column, and quantification was achieved with a high-resolution GC/MS. The instrumental analysis and measurement conditions were as follows.
GC oven temperature: 120°C (0.5 min)-10°C/min-180°C (0 min)-4°C/min-210°C (0 min)-10°C/min-300°C (10 min),
GC column: ENV-8MS (0.25 mm inside diameter × 30 m),
Injection method: splitless,
Injection amount: 1 µL,
Ionization method: EI+,
Resolution: 10000 or higher (10% valley),
Analysis method: accurate masses (m/z) of 269.8804 and 71.8775 were measured by SIM. Each compound was measured by an internal standard method using 13C.

### Adsorbent applied surface of hazardous substance adsorbing multifunctional water soluble sheet; comparison between one side and both sides:

The multifunctional water soluble sheet of the present invention is applied to a soil by the following procedure. First, a hazardous substance adsorbing water soluble sheet with a predetermined width is spread over a surface of the soil in a vinyl greenhouse. Then, water is poured on the hazardous substance adsorbing water soluble sheet to disintegrate the sheet, and the hazardous substance adsorbing water soluble sheet is mixed into the soil with a cultivator. This soil mixing method was adopted, and the disintegrability of a water soluble sheet with the adsorbent applied to one side thereof and the disintegrability of a water soluble sheet with the adsorbent applied to both sides thereof were evaluated. The result revealed that, in the dissolved state after watering, the hazardous substance adsorbing water soluble sheet with partial absorbent coating on one side thereof had better sheet disintegrability and higher water solubility than the hazardous substance adsorbing water soluble sheet with the absorbent applied to the entire surfaces thereof.

### Outdoor usage with the use of cultivator:

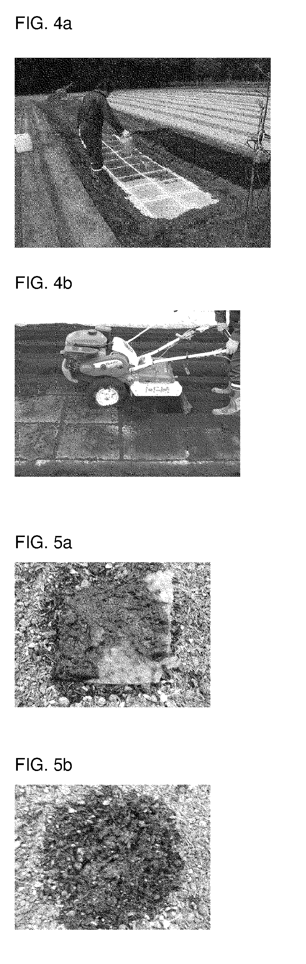

FIG. 4 shows photographs showing the states of the multifunctional water soluble sheet of the present invention during application to an open soil. (FIG. 4a) shows a state of the multifunctional water soluble sheet during watering simulating a rainfall, and (FIG. 4b) shows a state of the multifunctional water soluble sheet during the process of being mixed into the soil by a cultivator after watering. In the experiment, a water soluble paper 30CD-2 (slow disintegrating carboxymethyl cellulose sheet) manufactured by MISHIMA PAPER Co.,Ltd. (now NIPPON PAPER PAPYLIA CO., LTD.), which is less disintegrable and less expensive than the water soluble paper 30MDP, and the commercially available available activated carbon A, which has a specific surface area of 1000 m²/g and contains 200 mesh pass particles and which has an average particle size of 100 µm or less, where a particle density of the 200 mesh pass particles is such that a proportion thereof is more than 80% by weight, were used to prepare an activated carbon sheet A with an activated carbon content of 100 g/m². After water was sprinkled at a watering rate simulating a rainfall for 10 minutes, the sheet was mixed into the soil with a cultivator. The sheet was dispersed into the soil without being caught on the cultivator, and there was no fear of the sheet being blown into the air even after the soil dried.

### Test example for improvement of sheet disintegrability:

The change in the state of a multifunctional water soluble sheet 1c containing potassium bicarbonate and citric acid as a multifunctional water soluble sheet of the present invention that occurred when it was wetted with water was investigated. According to this investigation, the sheet remained in the form of a sheet immediately after being wet with water, but soon started to foam and disintegrate. In this experiment, a water soluble paper 30CD-2 manufactured by MISHIMA PAPER Co.,Ltd. (now NIPPON PAPER PAPYLIA CO., LTD.) was used, and 5 parts of potassium bicarbonate and 5 parts of citric acid were mixed with a 90% ethyl alcohol aqueous solution and stirred to prepare a process solution. The process solution was uniformly sprayed onto a surface of the water soluble paper and dried to obtain an experiment sample. in addition to the processed sheet, an unprocessed sheet, which had not been sprayed with the process solution, was also prepared. These experiment samples were wetted with water, and their disintegration rates were compared. The result was that the processed sheet foamed and disintegrated beyond recognition at a disintegration rate which was three times that of the unprocessed sheet.

### Disintegrated state of foaming agent-containing sheet applied to soil:

FIG. 5 shows photographs that show the state of a water soluble sheet coated with activated carbon and impregnated with potassium bicarbonate and citric acid as a multifunctional water soluble sheet of the present invention immediately after it was spread over a soil and wetted with water, and the state of the sheet after it was mixed into the sail approximately ten minutes later. (FIG. 5a) shows the state of the sheet immediately after it was wetted with water; the sheet was disintegrating. (FIG. 5b) shows the state of the sheet approximately ten minutes after it was wetted with water; the sheet had soaked into the soil. The sheet mixed well with the soil when stirred with the soil. A multifunctional water soluble sheet coated with activated carbon for comparison remained in the form of a sheet immediately after it was wetted with water. In this experiment, when a water soluble paper 30CD-2 (slow disintegrating carboxymethyl cellulose sheet) manufactured by MISHIMA PAPER Co.,Ltd. (now NIPPON PAPER PAPYLIA CO., LTD.), which is less disintegrable and less expensive than the water soluble paper 30MDP, was used, it had poorer disintegrability than the unprocessed sheet when the fine powder was applied to it. It was investigated whether it is possible to improve the sheet disintegrability by mixing a foamable additive into the adsorbent fine powder or by the use of a sheet impregnated with a formable additive.
Here, an experiment in a system using activated carbon as a simple-structure adsorbent is shown.
A process solution was prepared by mixing 85 parts of activated carbon, 5 parts of polyvinyl alcohol, 5 parts of potassium bicarbonate, and 5 parts of citric acid with a 90% ethyl alcohol aqueous solution and stirring the mixture. Immediately after the process solution was uniformly sprayed onto a surface of a water soluble paper 30CD-2, the water soluble paper was dried to obtain a multifunctional water soluble sheet (the sheet containing the foamable additive will be hereinafter referred to as "water soluble sheet c"). Another process solution was prepared by mixing 95 parts of activated carbon and 5 parts of polyvinyl alcohol with a 90% ethyl alcohol aqueous solution and stirring the mixture. Immediately after the process solution was uniformly sprayed onto a surface of a water soluble paper 30CD, the water soluble paper was dried to obtain a multifunctional water soluble sheet (the sheet free from the foamable additive will be hereinafter referred to as "water soluble sheet d"). The water soluble sheet d remained in the form of a sheet for a while after being wetted with water, whereas the multifunctional water soluble sheet c started to foam and disintegrate immediately after the contact with water and soaked into the sail almost completely within approximately ten minutes. When stirred with a stick, the sheet became almost distinguishable from the soil. The same experiment as described before was conducted using different types of adsorbents and different types of additives. Deterioration of adsorption performance of the adsorbent, lowering of the sheet disintegrability and decline in the function of the additive were not observed.

### EXAMPLE 2

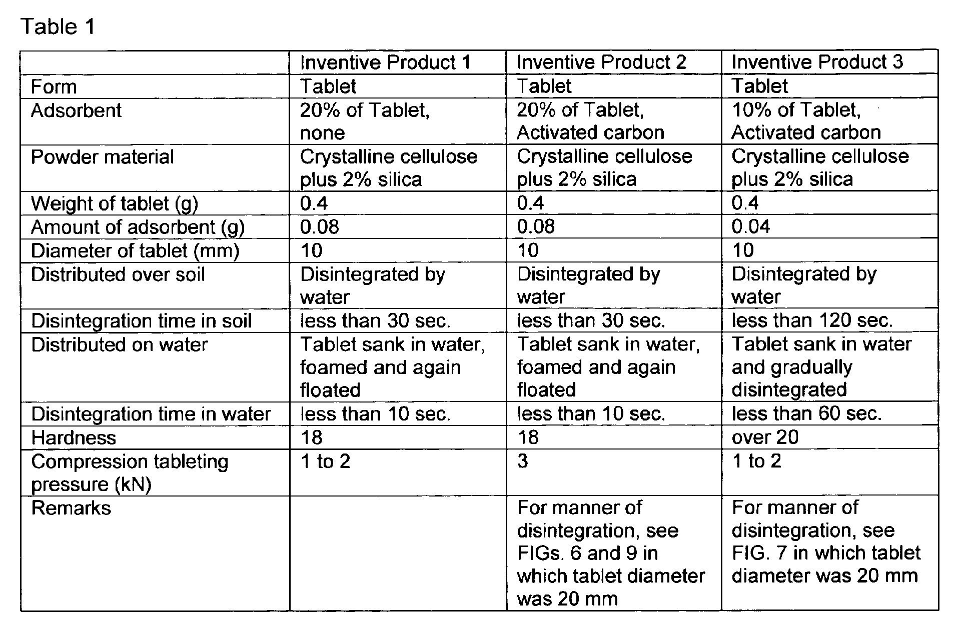

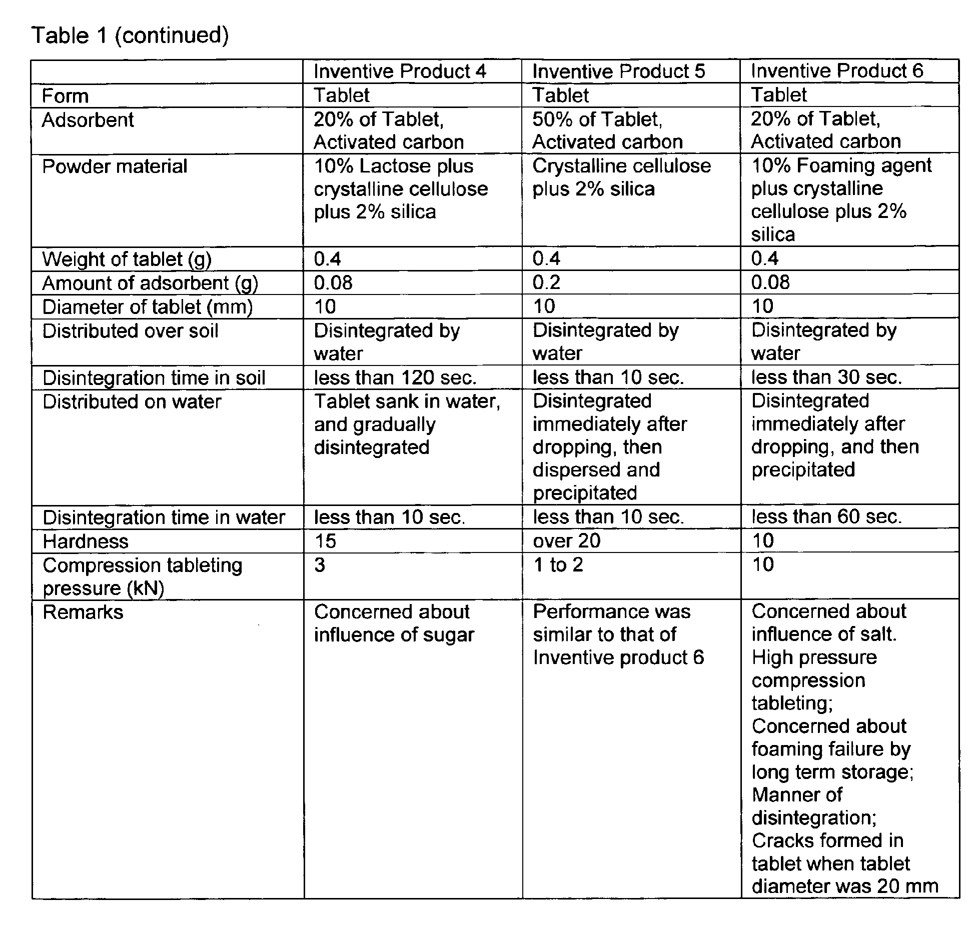

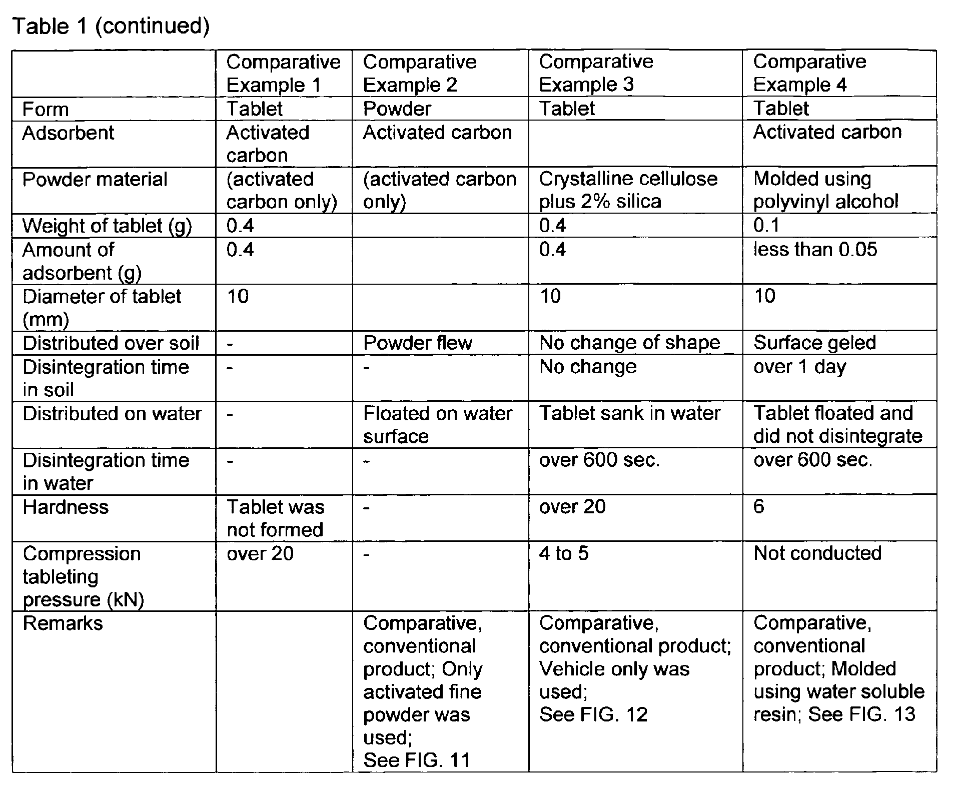

It is most preferred that the multifunctional adsorbing tablet having controlled disintegratability contain activated carbon having an average particle size of 100 µm or less and a specific surface area of 800 m²/g or more as the adsorbent in an amount of 50% by weight based on the weight of the tablet, and a combination of crystalline cellulose and silicon dioxide as a mixture of powders having a specific gravity of at least 1, since the resulting hazardous substance adsorbing tablet has the optimum form which permits free design of the adsorption performance and disintegration and dispersing performance. Examples of such an embodiment will be described below with reference to Table 1.

Table 1 shows the comparison results of moldability by compressing tableting, disintegration time in the soil, and disintegration, dispersing state and buoyancy in water of the tablets of Inventive Products 1 to 6 in which using amounts of each of the powders and the adsorbent used in combination therewith are varied. Table 1 also shows the results in Comparative Examples 1 to 4, which are examples using activated carbon by itself, using polyvinyl alcohol for molding a combination of activated carbon and the powder, and using only the powder composed of crystalline cellulose and silicon dioxide (without using activated carbon as the adsorbent).
In Table 1, the comparison results in Inventive Products 1 to 6 of Example 2 for disintegration time and dispersing state in soil and water when shape and mixing proportions are varies are summarized together with those in Comparative Examples 1 to 4. The integratability after the compression tableting in Inventive Products 1 to 6 and Comparative Examples 1 to 4 are as indicated in respective horizontal rows of the corresponding vertical columns of "Distributed over soil", "Disintegration time in soil", "Distributed on water" and "Disintegration time in water". The compression tableting conditions are as indicated in vertical columns of "Hardness" and "Compression tableting pressure".

### Inventive Products 1 to 6:

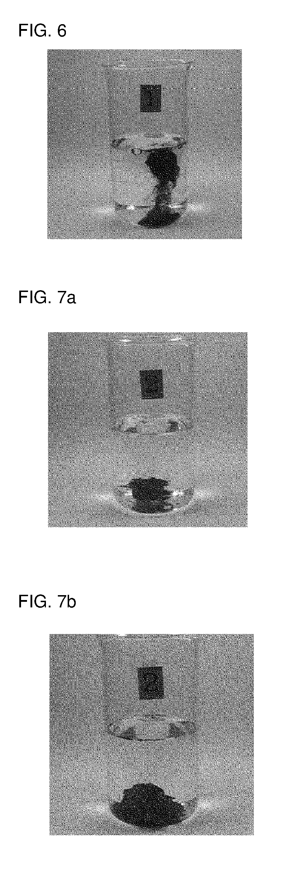

Porous inorganic fine powder was used as the adsorbent of Inventive Product 1 and activated carbon fine powder having a specific surface area of 1000 m²/g and an average particle diameter of 30 µm was used as the adsorbent of Inventive Product 2. Activated carbon with similar properties was used for the rest. In each of Inventive Products 1 and 2, the amount of the adsorbent was 20% with the balance being a vehicle composed of crystalline cellulose and silicon dioxide. These ingredients were mixed and tableted to obtain tablets.
Inventive Products 1 and 2, when applied with water, disintegrated well on the soil. When added into water, they once sank in water, then floated and finally dispersed as shown in FIG. 6. Thus, the produced tablets may be used for both land and water. Further, because the tablets of Inventive Products 1 and 2 were prepared without using any foaming agent, a long term storage stability was ensured.

The proportion of the adsorbent was reduced in Inventive Product 3 to one half (10%) the above examples. In Inventive Product 4, the proportion of the adsorbent was not changed but another vehicle was substituted for a portion of the powder material. In each of Inventive Products 3 and 4, as shown in FIG. 7, the tablet sank in water and began disintegrating (FIG. 7a) and was gradually dispersed (FIG. 7b). The above test results show that it is possible to permit the tablets to disintegrate with a longer disintegration time in water, by decreasing the amount of the adsorbent as in Inventive Product 3 or by additionally using a further vehicle as a part of the powder material as in Inventive Product 4. That is, it can be said that the disintegration and dispersion time are controllable.
In the tablets of Inventive Product 5, the proportion of the adsorbent was increased to 50%. At the same time, the proportion of silicon dioxide in the powder material was increased to 50%. In this example, the tablet disintegrated and precipitated immediately after having been added into water. When the content of the adsorbent was high, an increase of the proportion of silicon dioxide permitted to obtain tablets that had fast disintegratability and dispersability without use of a foaming agent.

Inventive Product 6 is an example in which a foaming agent is additionally incorporated in an amount of 10%. When 10% foaming agent was used, the tablet disintegrated and precipitated immediately after having been added into water as in the case of Inventive Product 5. When the storage time was 6 months or less, the tablet floated for a long time and then disintegrated and precipitated. The floating time was nearly proportional to the storage time. Thus, when a foaming agent is incorporated into the tablet as in the case of Inventive Product 6 and when the storage time of the table is not longer than 6 months, the tablet can be a hazardous substance adsorbing tablet capable of floating in water for a long period of time and of quickly disintegrating and dispersing therein.

### Comparative Examples 1 to 4

Comparative Example 1 used commercially available activated carbon fine powder. The activated carbon fine powder was tried to be tableted by itself by compression tableting but was unable to produce tablets even with the maximum compression pressure of the tableting machine. It was thus found that it was impossible to form tablets when activated carbon fine powder is used by itself.
Comparative Example 2 used commercially available activated carbon fine powder as such. In application to the soil, the fine powder formed a cloud of dust. In application to water, because of its small specific gravity, the fine powder was afloat on the water surface as shown in FIG. 11. The activated carbon fine powder as such was found to be unsuited for application to polluted ground or water.

The tablet of Comparative Example 3 was prepared by compression tableting of commercially available vehicle for direct compression tableting (2% compounded crystalline cellulose). Test results indicated that the tablet had good moldability. When applied to the soil, the tablet hardly disintegrated by water sprinkling. As shown in FIG. 12, the tablet sank in water but the disintegratability thereof was poor. The disintegration time in water at 15°C was over 600 seconds. The tablet showed low disintegratability in an environment of low temperature water of the polluted site and was found to be problematic in application thereof to such a site.
The tablet of Comparative Example 4 was prepared by molding and compacting a mixture containing 5 parts of the above-described activated carbon fine powder with 1 part of water soluble polyvinyl alcohol. The resulting tablet when applied to the soil did not disintegrate by water sprinkling. As shown in FIG. 13, the tablet floated on water when dripped into water and did not disintegrate after one day. Test results indicated that the tablet had improved moldability by compression tableting of the activated carbon fine powder. However, the tablet floated on water and did not disintegrate in an environment of water of the polluted site and was found to be ill-suited for application to such a site.

### Test 1

### Disintegratability test for Inventive Product 1 in the soil:

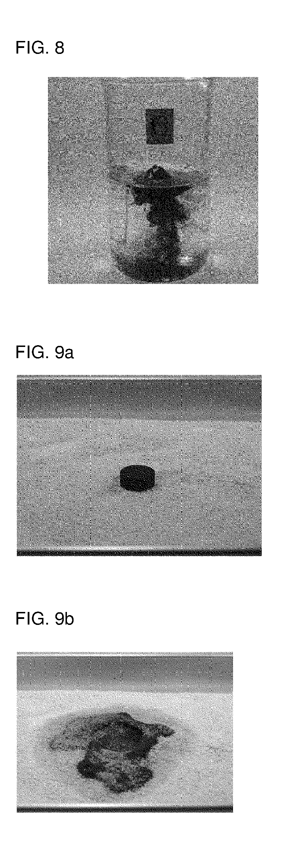

FIG. 9 shows the results of a disintegration test in which a 20 mm diameter tablet prepared, with use for the soil in mind, by compression tableting a mixture with the same mixing proportion as in Inventive Product 1 shown in Table 1 was used. FIG. 9a shows the state in which the tablet of Inventive Product 1 is placed on the soil and FIG. 9b is a photograph showing the state of the tablet 60 seconds after the start of dropping of water. The dropping of water was carried out in such a manner that 25 mL of water was dropped thrice using a pipette at an interval of 10 seconds.
It was found that the tablet disintegrated within 30 seconds by application of a small amount of water and the fine powder adsorbent flew into the interstices of the soil as shown in FIG. 9b. The soil and the adsorbent were found to well contact with each other. Thus Inventive Product 1 was found to provide a hazardous substance adsorbing tablet which is usable in arid zone soil or for agriculture using a small amount of water and which is high in safety.

### Test 2

### Chemical substance adsorption test for Inventive Products 1 to 6 applied to water environment:

Tablets used in the adsorption test are three types of tablets prepared in consideration of Inventive Products shown in Table 1. Thus, A-type Tablet, B-type Tablet and C-type Tablet which have a weight of 0.4 g and different contents of an adsorbent are used in the test. For the purpose of preparing tablets which can swiftly disintegrate and disperse in water and can adsorb hazardous substances without using a specific foaming agent, contents of the adsorbent were varied and silicon dioxide powder was used in a large amount. Each of the tablets was subjected to tests of adsorbing chemical substances, which leached into water from a bottom sediment of the river (namely sludge), under the following conditions.

The activated carbon fine powder of each of the tablets had a specific surface area of 1,000 m²/g and an average particle diameter of 30 µm.
Type-A Tablet was prepared by mixing 0.02 g of the activated carbon with 0.18 g of silicon dioxide, which was compression tableted using the balance amount of crystalline cellulose as a vehicle to obtain tablet A as test specimen to be added. Type-B Tablet was prepared by mixing 0.10 g of the activated carbon with 0.10 g of silicon dioxide, which was compression tableted using the balance amount of crystalline cellulose as a vehicle to obtain tablet B as test specimen to be added. Further, Type-C Tablet was prepared by mixing 0.18 g of the activated carbon with 0.02 g of silicon dioxide, which was compression tableted using the balance amount of crystalline cellulose as a vehicle to obtain tablet B as test specimen to be added. The small scale experiment of these specimens was performed under the following conditions.

### Sampling method:

From air-dried bottom sediment of a river (sludge), 20 g of soil were weighed and placed in each vessel, to which 600 mL of pure water were added. Each of the vessels was closed and shaken for 1 week at 100 rpm using a horizontal shaking device with simulation of a flow of a river. Then, 200 mL of the supernatant was sampled every week. After 200 mL of the supernatant had been sampled, 7 pieces of A-type Tablets, B-type Tablets and C-type Tablets (each tablet had a weight of 0.4 g) were added thereto. The test was carried out for three weeks by sampling the supernatant in the same manner as above every week. In this case, for the purpose of maintaining elution equilibrium of chemical substances of each sample, 200 mL of pure water was supplemented and, thereafter, the shaking was carried out. The same procedure was continued for 3 weeks.

### Measurement conditions:

Extraction of sample was performed as follows. Each of the 200 mL supernatant sampled every week was filtered through a glass filter and added to a separation funnel containing 100 mL of hexane. This was shaken for 30 minutes. Such liquid-liquid extraction was conducted 3 times. The hexane layer was concentrated and purified on a Florisil column with 100 mL of 25% dichloromethane and 75% hexane and then on an ENVI-carb SPE column with 10 mL of hexane. Measurement was by a high resolution GC/MS.
GC oven temperature: 120°C (0.5 min) -10°C/min - 180°C (0 min) - 4°C/min -210°C (0 min) - 10°C/min - 300°C(10 min),
GC column: ENV-8MS (0.25 mm inside diameter × 30 m),
Injection method: splitless,
Injection amount: 1 µL,
Ionization method: EI+,
Resolution: 10000 or higher (10% valley),
Analysis method: SIM method (accurate mass (m/z) was measured in the low and high mass regions (as shown below) separately so as to enable simultaneous measurement of all components. Each compound was measured by an internal standard method using 13C.
High mass region (m/z):
Trans, cis-heptachloroepoxide 352.8442, 354.8413, 13C,
Trans, cis-heptachloroepoxide 362.8778, 364.8748,
Trans, cis-chlorodene 372.826, 374.823, 13C,
Cis-chlorodene 382.8595, 384.8566,
Oxychlorodene 386.8052, 388.8023, 13C,
Oxychlorodene 396.8388, 398.8358,
Trans, cis-nonachlor 406.787, 408.784, 13C,
Trans, cis-nonachlor 416.8205, 418.8176,
Low mass region (m/z):
Hexachlorocyclohexane (HCH) 216.9145, 218.9116, 13C,
Hexachlorocyclohexane 222.9347, 224.9317,
Dichlorodiphenyltrichloroethane (DDT), Dichlorodiphenyldichloroethane (DDD) 235.0081, 237.0052, 13C DDT, DDD 247.0484, 249.0454,
Dichlorodiphenyldichloroethylene (DDE) 246.0003, 247.9974, 13C
DDE 258.0406, 260.0473,
Aldrin, Dieldrin, Endrin 262.857, 264.854, 13C
Aldrin, Dieldrin, Endrin 269.8804, 271.8775,
Mirex, Heptachloro 271.8102, 273.8072, 13C,
Mirex, Heptachloro 276.8269, 278.824,
Hexachlorobenzene (HCB) 283.8102, 285.8072, 13C
Hexachlorobenzene 289.8303, 291.8273
The results are shown in Tables 2 to 5.

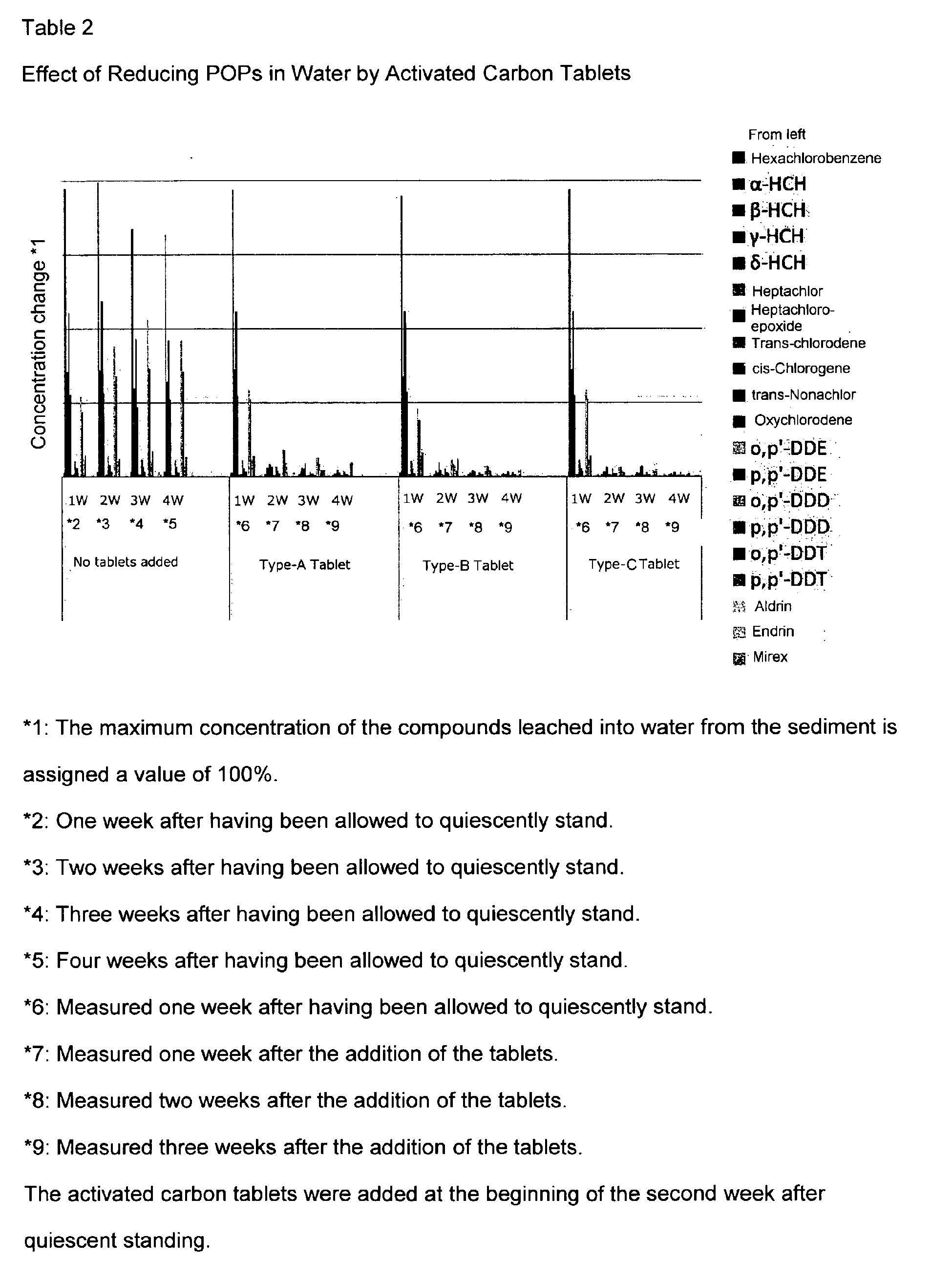

Table 2 shows, in the form of graphs showing changes of POPs reducing effect as a function of predetermined period of time, the whole data concerning the test results of adsorbing chemical substances, leached into water from the sampled bottom sediment of the river, by each type of tablets having different adsorption performance as shown in Table 1.

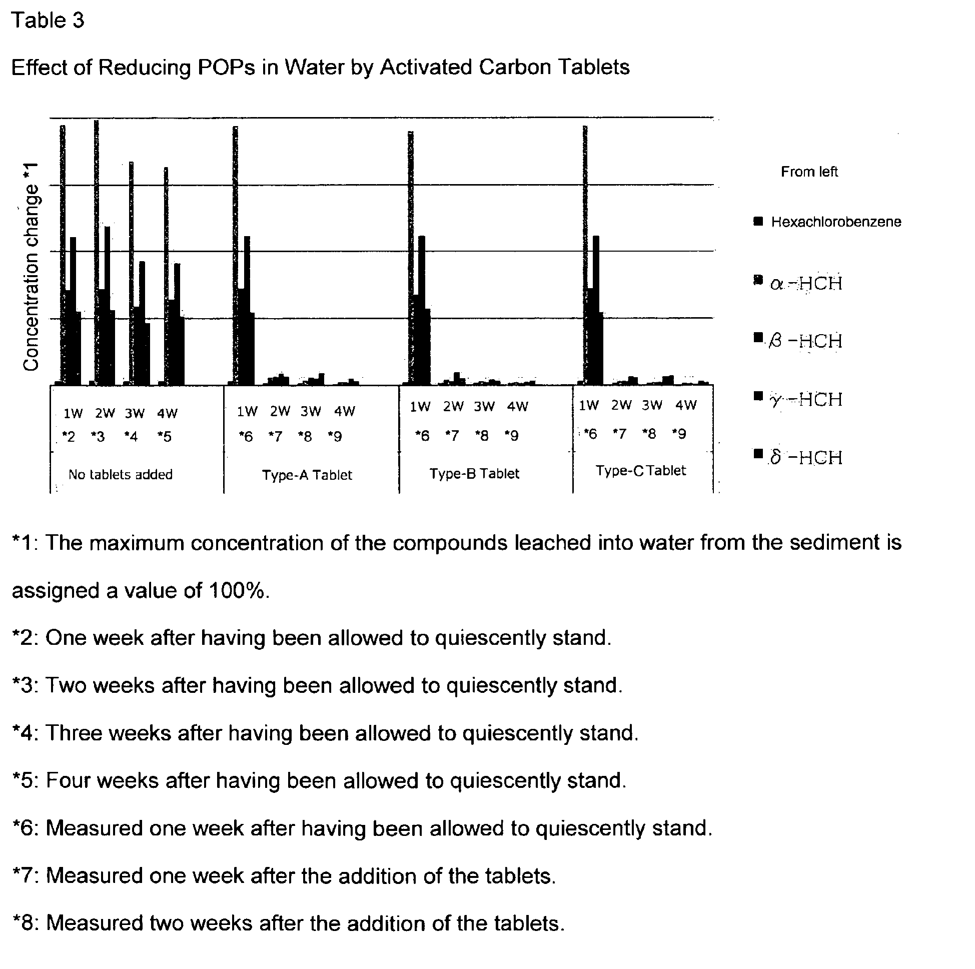

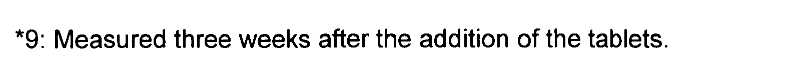

The activated carbon tablets were added at the beginning of the second week after quiescent standing.

Table 3 shows graphs showing the data, extracted from Table 2, concerning reduction of HCB and HCH compounds.

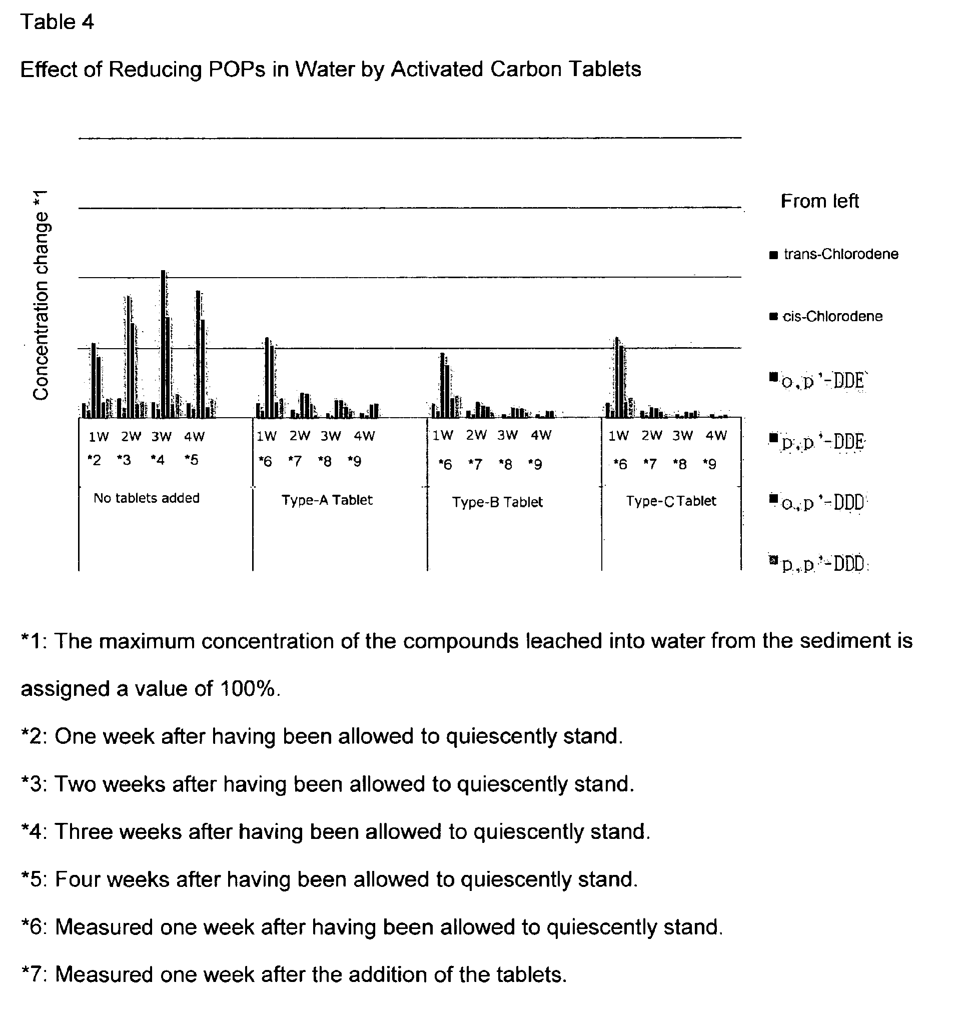

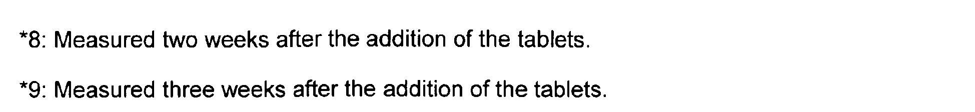

The activated carbon tablets were added at the beginning of the second week after quiescent standing.

Table 4 shows graphs showing the data, extracted from Table 2, concerning reduction of compounds other than HCB and HCH compounds.

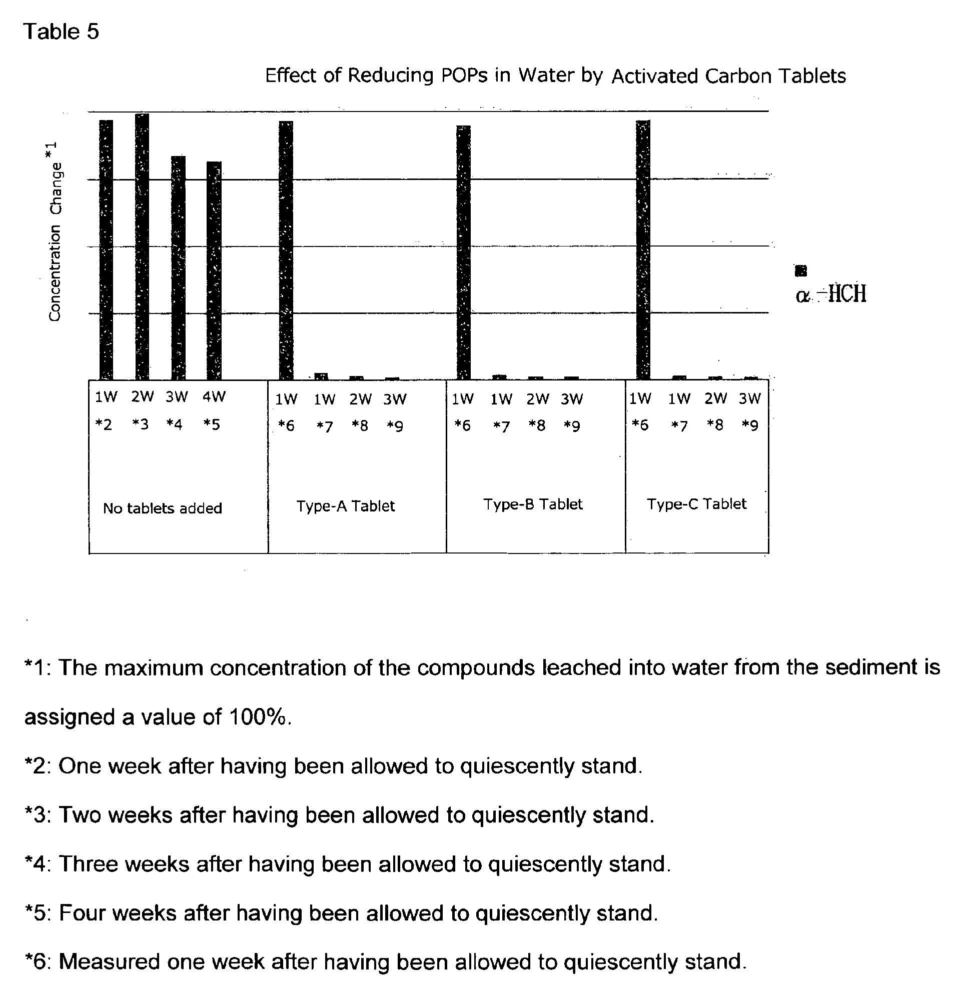

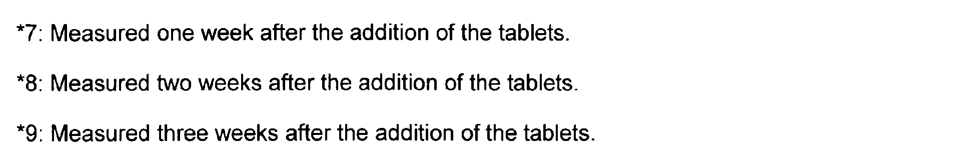

The activated carbon tablets were added at the beginning of the second week after quiescent standing.

Table 5 shows graphs showing the data, extracted from Table 2, concerning reduction of HCB compounds, namely concerning reduction of hazardous compounds leached into water from the bottom sediment.

### Test results:

Each of Tablets A to C showed fast disintegratability in water. FIG. 10 shows the manner of disintegration with foaming. As shown in Tables 2 to 5, when the tablets were not added ("no tablets added"), hazardous chemical substances were leached into water. In the case of "no tablets added", the concentration of the hazardous chemical substances was unchanged. In contrast, when each of Tablets A to C was added, the amount of each of the detected hazardous chemical substances was found to significantly decrease although there were certain time differences in adsorption speed depending upon the kinds thereof. Table 5 shows an example, extracted from Table 2, of the behavior of the hazardous chemical compounds of α-HCH that were dissolved in water from the bottom sediment.

### Results of observation of tablet surface with electron microscope:

A surface of the tablet of the present invention was observed by a scanning electron microscope. For preparing the tablet for the observation, activated carbon having a specific surface area of 1,000 m²/g and an average particle size of 30 µm was used as the fine powder adsorbent, porous silicon dioxide was used as the powder, and crystalline cellulose was used as the vehicle, though entire or part of the adsorbent or fine powder may include powders having porous property, adsorbing property or specific gravity of at least 1 and one or a plurality of substances including naturally occurring minerals, such as calcite, zeolite, active clay, granite pegmatite and ilmenite, and artificial zeolite whose pore size is controlled.

The scanning electron microscope (magnification: 1000) reveals that the activated carbon (black regions) as the adsorbent entered into powder having a specific gravity of at least 1 (white regions) and was press-bonded thereto and that the activated carbon particles were press-bonded to surfaces of the powder.
Blending and mixing the activated carbon with silicon dioxide result in entrance, while compression tableting results in press-bonding to increase the hardness of the tablet. When the tablet is added into water, water is considered to penetrate into interstices of porous sections of the adsorbent or powder so that the vehicle becomes swellable and the powder and adsorbent become apt to disperse.
Observation of a surface of the tablet of a mixture containing the activated carbon, porous powder and vehicle by scanning electron microscope (magnification: 600) showed presence of fine powder activated carbon (black regions), powder (white regions) and cracks on the surface of the tablet.
The disintegration time became faster and the amount of the vehicle decreased as the content of the porous silicon dioxide increased, though the hardness of the tablet was unchanged. The higher the content of the porous silicon dioxide, greater became the number of cracks, though the hardness was not adversely affected. This suggests that surface cracks facilitate penetration of water into the tablet.

When a tablet was prepared from a mixture obtained by mixing 1 part of activated carbon, 5 parts of silicon dioxide and 4 parts of crystalline cellulose at a compression tableting pressure of 2 kN, powders having various shapes were found to disperse on a surface of the tablet molded article in a photograph by scanning electron microscope (magnification: 35).

### INDUSTRIAL APPLICABILITY

The technology that makes it possible to prepare tablets having controlled disintegratability by using a fine powder adsorbent including a porous powder may be also applied to a pharmaceutical field. By using a porous fine powder into which a slowly releasable agent has been impregnated as the adsorbent, there may be provided fast disintegratable tablets which may be prepared with simplified process steps and which has a high hardness.

### Explanation of Reference Numerals

1: Water soluble sheet
2: Adsorbent
3: Additive

## Claims

1. A hazardous substance adsorbing formed body that is formed from a powder adsorbent as a raw ingredient using a binder,
wherein the adsorbent is configured to adsorb a hazardous substance contained in a polluted environment of a soil or water,
wherein said binder may be an additive that imparts other functions to the raw ingredient, wherein a blend of the adsorbent and the additive is used as a raw material for deposition to a flexible water soluble sheet or for forming a unitary body as such,
wherein the raw material is formed, either as such or together with the flexible water soluble sheet, into the hazardous substance adsorbing formed body in the form of a unitary body,
wherein the adsorbent powder is a porous fine powder which contains 200 mesh pass particles and has a particle density, in terms of average particle size, of 100 µm or less, where a proportion of the 200 mesh pass particles is more than 80% by weight, and wherein the formed body of the unitary body has controlled disintegratability and dispersability.

2. The hazardous substance adsorbing formed body according to claim 1, wherein the powder adsorbent is at least one substance selected from minerals such as calcite, zeolite, activated clay, diatomaceous earth and ilmenite; and substances having fast-acting adsorbing performance or water holding property and being polyamino acids, polysaccharides, polyacrylic acid, inorganic salts, chelating agents and activated carbon of 800 m²/g or more.

3. The hazardous substance adsorbing formed body according to claim 1 or 2, wherein the additive is at least one member that facilitates decomposition of hazardous substances and is an oxidizing agent, a reducing agent, a decomposing bacterium, a slow oxygen-releasing agent and nutrients for growing bacteria.

4. The hazardous substance adsorbing formed body according to any one of claims 1 to 3, wherein the hazardous substance adsorbing formed body is in the form of a sheet comprising the flexible water soluble sheet that is any one or a combination of films, water-soluble papers, water disintegrable papers and non-woven fabrics, each made from a fast decomposable material, such as a polysaccharide, a cellulose, polyvinyl alcohol, carboxymethyl cellulose or starch, and deposits of a deposition material which is integrally formed on the sheet and which is a blend containing the powder adsorbent, the additive giving other functions and a water soluble binder.

5. The hazardous substance adsorbing formed body according to claim 4, wherein said additive comprises at least one of a fertilizer, an agricultural chemical, a pH controlling agent and an antibacterial antiseptic agent.

6. The hazardous substance adsorbing formed body according to any one of claims 1 to 3, wherein the hazardous substance adsorbing formed body is in the form of a tablet that has controlled buoyancy and that is formed by integrating under a pressure a blend which is used as such as a tableting material and which comprises the powder adsorbent, the additive giving other functions, a vehicle serving as the binder and fine powder having a specific gravity of at least 1.

7. The hazardous substance adsorbing formed body according to claim 6, wherein said vehicle comprises at least one member selected from the group consisting of crystalline cellulose, carboxymethyl cellulose, hydroxypropyl cellulose, starch, lactose, silicon dioxide, a polysaccharide, mannitol and anhydrous calcium hydrogen phosphate.
